# EUROPEAN PATENT SPECIFICATION

(11) **EP 4 363 124 B1**
(45) Date of publication and mention of the grant of the patent: **09.04.2025**
(21) Application number: 22741577.5
(22) Date of filing: 28.06.2022
(51) Int. Cl.: B05B 11/10, F16J 1/00

(54) **TRIGGER DISPENSING HEAD WITH MEANS TO PREVENT LEAKAGE OF PRODUCT**
TRIGGERSPENDERKOPF MIT MITTELN ZUR VERMEIDUNG VON LECKAGEN
TÊTE DE DISTRIBUTION À GÂCHETTE MUNIE DE MOYENS EMPÊCHANT LA FUITE DE PRODUIT

(30) Priority: 01.07.2021 IT 202100017402
(43) Date of publication of application: 08.05.2024
(73) Proprietor: Guala Dispensing S.p.A., 15122 Alessandria (IT)
(72) Inventor: ALLUIGI, Riccardo, 15122 Alessandria (IT)
(74) Representative: Pulieri, Gianluca Antonio
(86) International application number: PCT/IB2022/055978
(87) International publication number: WO 2023/275732

(56) References cited:
- WO-A1-2006/075753
- WO-A1-2020/023703
- JP-A- H11 221 501
- US-A- 5 353 969
- US-B1- 6 223 933

## Description

### Prior art

This invention is in the field of trigger dispensing devices, typically used for dispensing liquid products for household hygiene, personal care, and countless other purposes. In particular, the subject of this invention is a trigger dispensing head applicable to a bottle, provided with an anti-leakage device to prevent leakage of product from the venting duct.

### Background of the invention

Trigger dispensing devices are enormously popular today; several hundred million units are manufactured and sold each year.

Traditionally, once the bottle has been filled with the product and the dispensing head has been applied to the bottle, the devices are placed in specially sized cardboard boxes so that they may safely travel to storage or sales locations. In particular, despite loading and unloading from the transport and storage means, the boxes ensure that the devices are not subject to shocks that could compromise their functionality or cause product spillage. Further, the placement of individual devices on supermarket shelves is also done by attentive staff and generally with great care.

For some years now, online commerce has been widely used by consumers for the purchase of food, detergents, and every other kind of merchandise. The widespread use of these sales methods has manifested new needs and raised new issues for the trigger dispensing device industry as well.

In fact, it is quite common for said devices to be stored in less than optimal conditions, or for a device to be shipped to the consumer in a standard-sized box that is larger than said device, or for other goods, such as a book or other bottles, to be placed in the same box.

During transport, the device is subjected to impacts and crushing, which may lead to the breakage of components such as the trigger or the shell, disassembly, undesired activation of the trigger and, often, to product leakage.

One of the drawbacks encountered is the leakage of product through the venting duct, which usually places the internal compartment of the bottle in communication with the external environment, necessary for the entry of air into the bottle during the suction step, while the product is suctioned from the bottle towards the pressure chamber.

JP H11 221501 A discloses a liquid ejecting apparatus for liquid substances.

### Summary of invention

It is the object of this invention to make a trigger dispensing head which meets the aforesaid requirements and overcomes the drawbacks mentioned above.

This object is achieved by a dispensing head according to claim 1. The dependent claims disclose further advantageous embodiments of the invention.

### Brief description of the drawings

The features and advantages of the dispensing head according to this invention will be apparent from the description below, given by way of non-limiting example in accordance with the figures in the appended drawings, wherein:

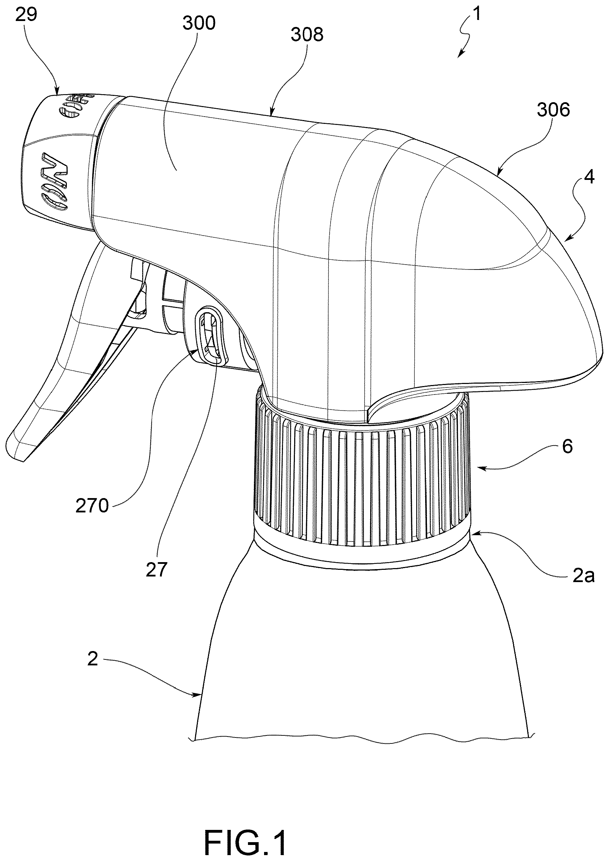

- Fig. 1 depicts a trigger dispensing device according to an embodiment of this invention;

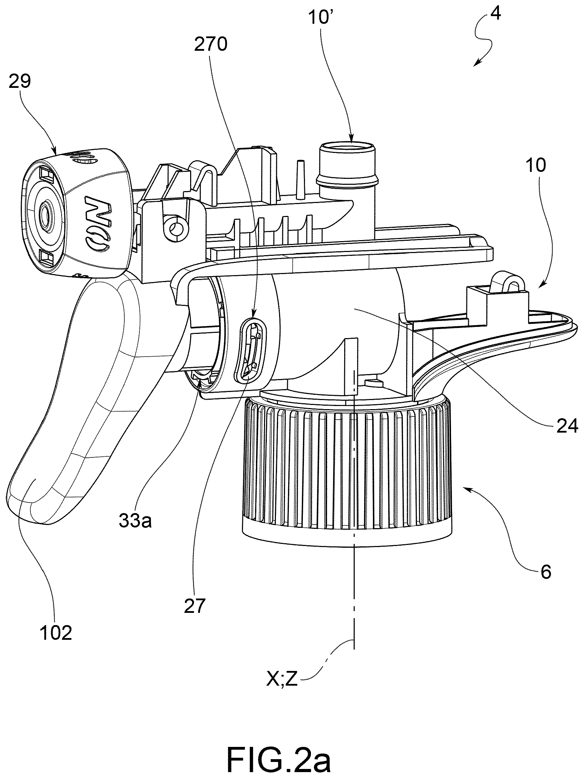

- Fig. 2a shows a trigger dispensing head without the shell;

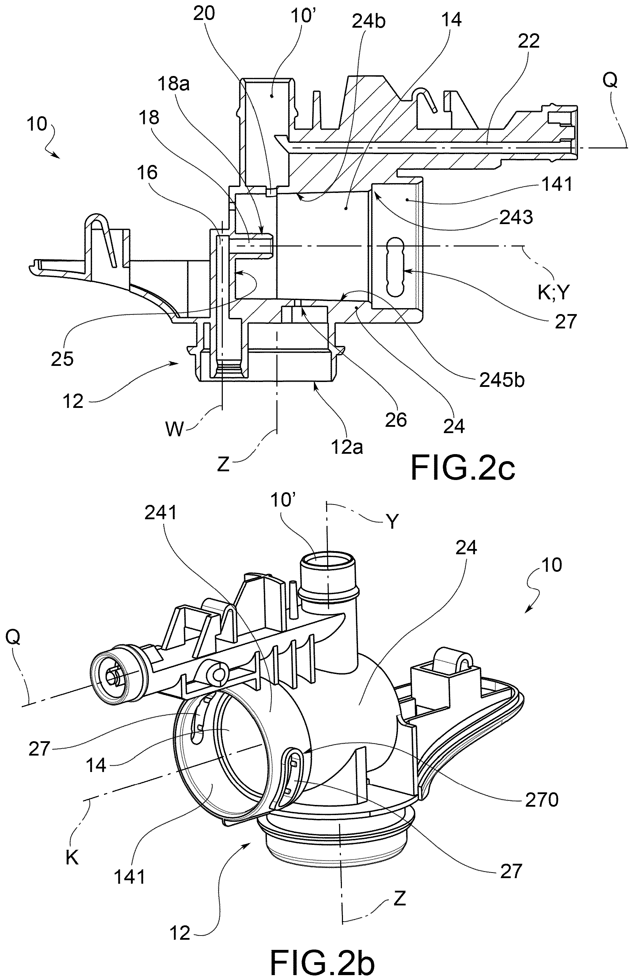

- Figs. 2b and 2c show a frame of the dispensing head and a sectional view thereof, respectively;
- Fig. 3 illustrates an axial sectional view of the trigger dispensing device in an initial configuration, according to an embodiment of the present invention;
- Fig. 4 is a sectional view of the trigger dispensing head in an intermediate trigger actuation configuration;
- Fig. 5 illustrates a sectional view of the trigger dispensing head in an end-of-stroke configuration of the piston, with pre-compression valve means in an opening configuration;
- Fig. 6 shows a sectional view of the trigger dispensing head in a trigger release configuration;

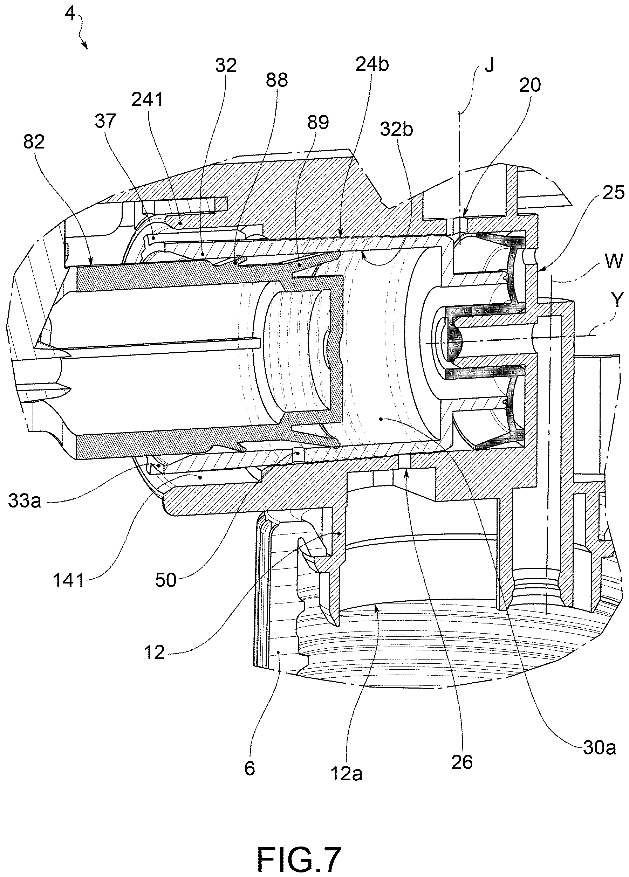

- Fig. 7 shows an enlarged detail of Fig. 3;

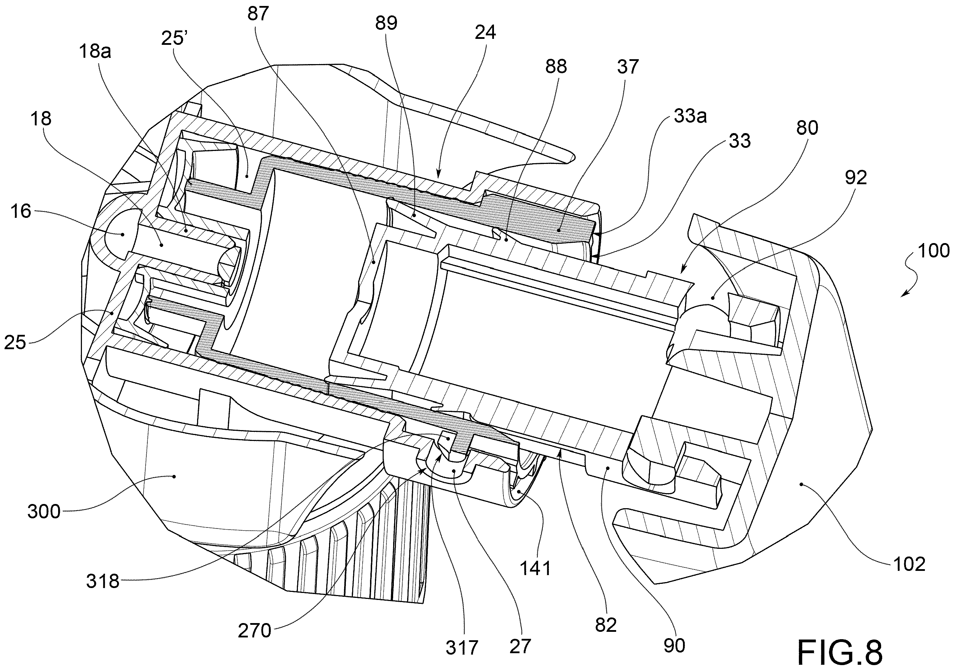

- Fig. 8 shows a cross-sectional view of the dispensing head of Fig. 3;

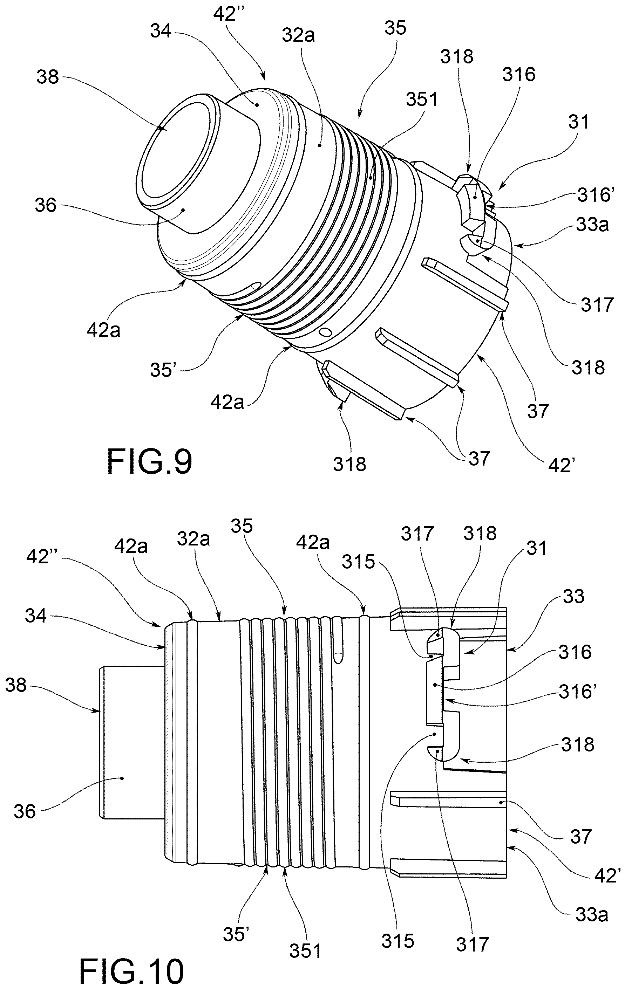

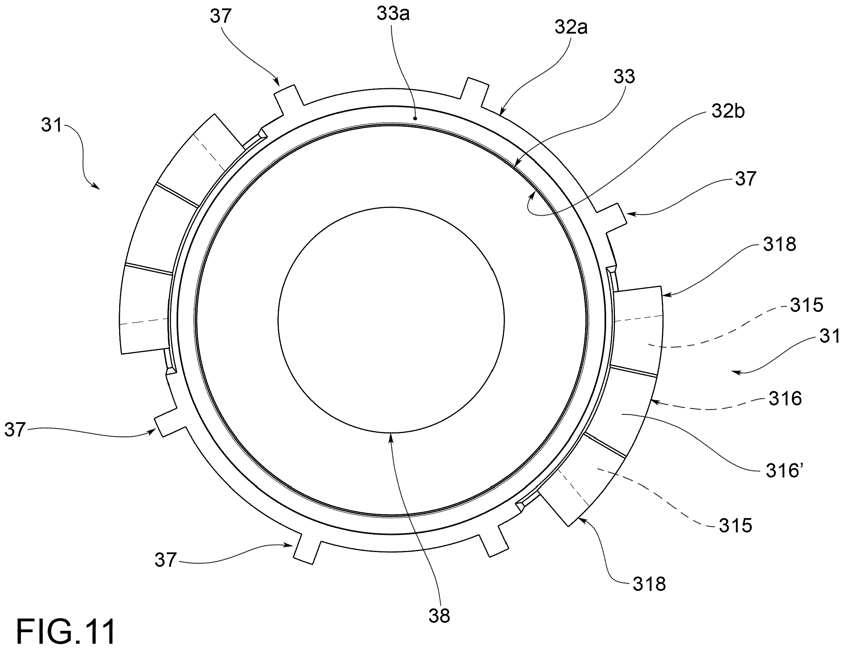

- Figs. 9, 10 and 11 show a sleeve of the dispensing head, a side view thereof and a front view thereof, respectively;

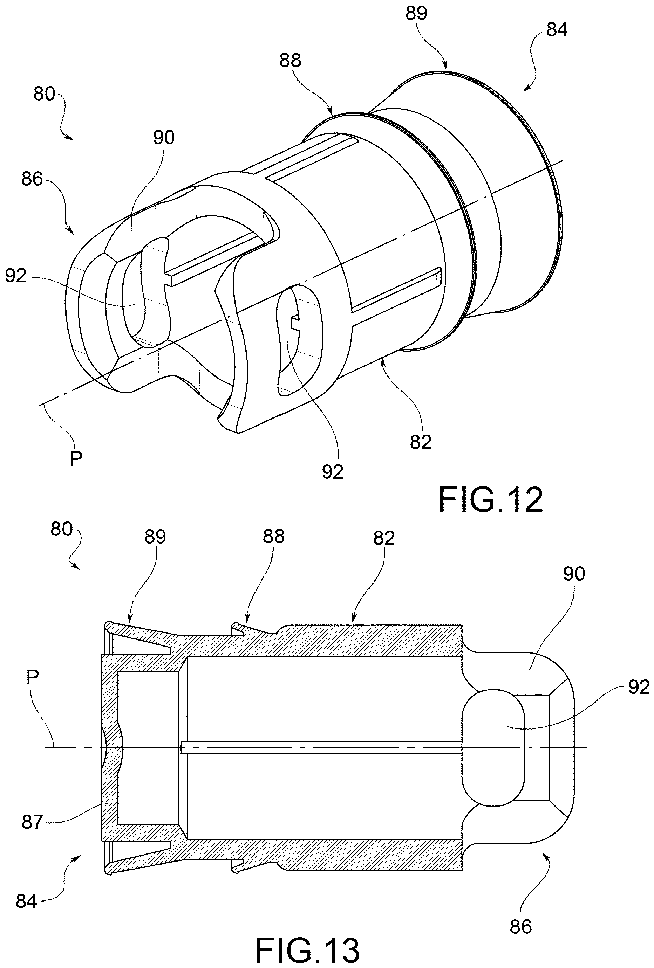

- Figs. 12 and 13 show a piston of the dispensing head and a sectional view thereof, respectively;

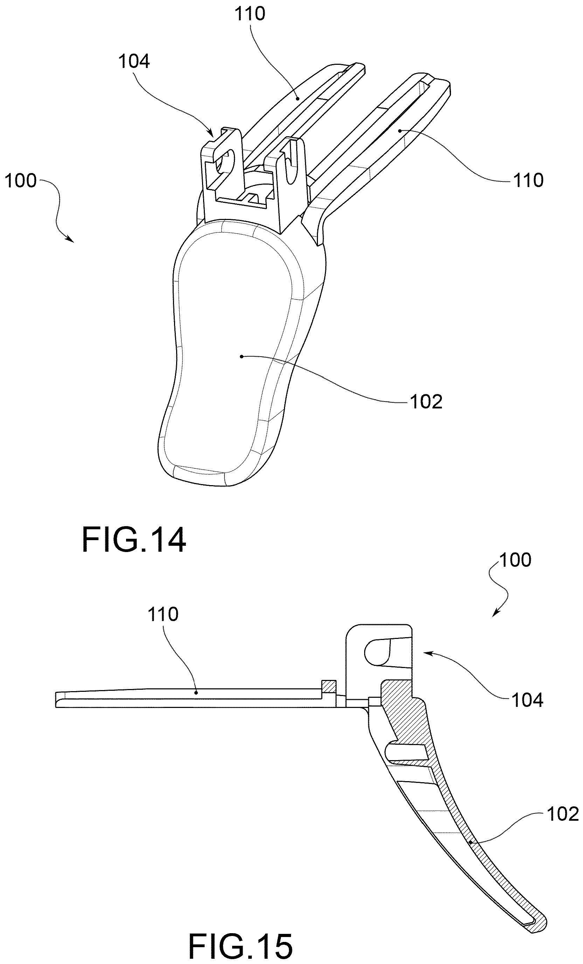

- Figs. 14 and 15 show a trigger of the dispensing head and a sectional view thereof, respectively;

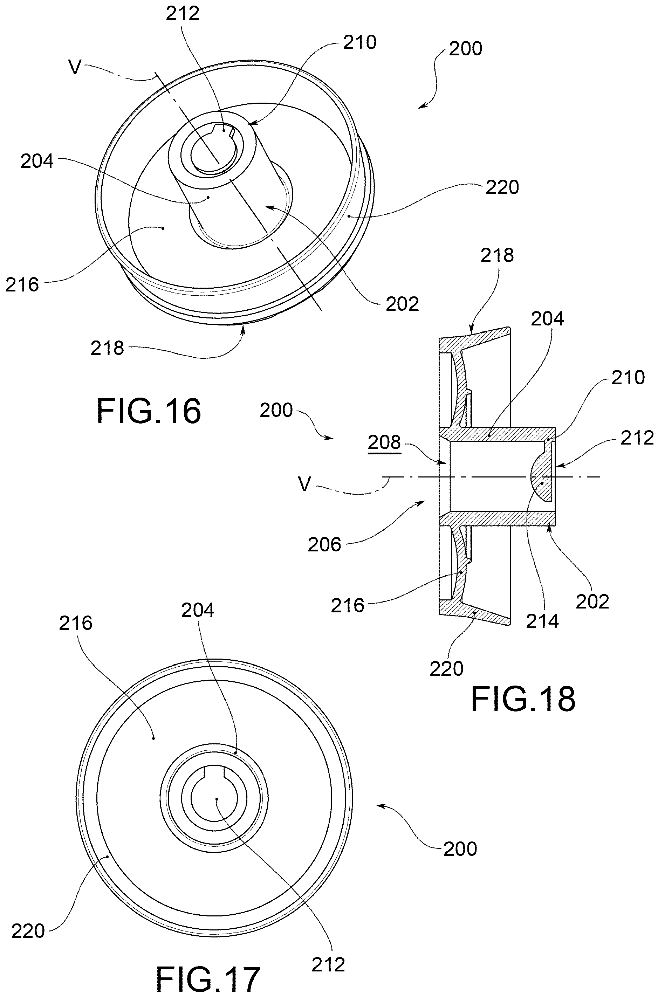

- Figs. 16, 17 and 18 show a valve element of the dispensing head, a plan view thereof and a sectional thereof, respectively;
- Figs. 19, 19a show a sleeve and a sectional view thereof, respectively, according to a first embodiment;
- Figs. 19b, 19c show an enlarged detail of the dispensing head, according to the first embodiment, on a sectional plane incident to the suction axis W and a sectional plane parallel to the suction axis W, respectively;
- Figs. 20 and 20a show a sleeve and a sectional view thereof, respectively, according to a second embodiment;
- Fig. 20b shows an enlarged detail of the dispensing head, according to the second embodiment, on a sectional plane parallel to the suction axis W.

### Description of a preferred embodiment

With reference to the figures of the appended drawings, a trigger dispensing device comprising a bottle 2 for containing a liquid product to be dispensed and a trigger dispensing head 4 applied to a neck 2a of the bottle have been collectively referred to as 1. The neck 2a has a neck axis X.

The head 4 is applicable to the bottle 2 by means of a ferrule system comprising a threaded ferrule 6 which may be screwed to the neck 2a or, according to a variant embodiment, by means of a bayonet system (not shown), preferably equipped with an anti-removal ridge.

The head 4 comprises a frame 10, preferably made in one piece of plastic material, for example by injection molding, adapted to support the components of the head 4.

The frame 10 comprises an attachment portion 12 provided with a main opening 12a having an attachment axis Z; when the head 4 is applied to the neck 2a, the main opening 12a is in communication with the compartment inside the neck 2a, and the attachment axis Z is coincident with the neck axis X.

The head 4 also comprises a cylinder chamber 14, of cylindrical circular shape, for example having a chamber axis K orthogonal to the attachment axis Z; preferably, the cylinder chamber 14 is formed in the frame 10.

The head 4 further comprises a suction duct that connects the main opening 12a with the cylinder chamber 14.

Preferably, said suction duct comprises a first suction segment 16 which, starting from the main opening 12a, extends along a first suction axis W, parallel to and preferably spaced apart from the attachment axis Z, and a second suction segment 18 which flows into the cylinder chamber 14 and extends along a second suction axis Y, parallel to the chamber axis K; for example, the second suction axis Y is coincident with the chamber axis K. The second suction segment 18 is delimited by a suction mouth 18a.

Preferably, moreover, the first suction segment 16 and/or the second suction segment 18 are formed in the frame 10.

The head 4 further comprises a dispensing duct that places the cylinder chamber 14 in communication with the external environment.

Preferably, the dispensing duct comprises a first dispensing section 20 which, starting from the cylinder chamber 14, extends along a first suction axis J incident, for example orthogonal, to the chamber axis K, and a second dispensing section 22 which opens into the external environment and extends along a second dispensing axis Q parallel to the chamber axis K.

Preferably, moreover, the first dispensing segment 20 and/or the second dispensing segment 22 are formed in the frame 10.

Preferably, the dispensing head 4 further comprises a nozzle 29, applied to the free end of the second dispensing section 22, preferably rotatable at least between a dispensing position, in which the second dispensing section 22 is in communication with the external environment, and a closed position, in which fluid communication between the second dispensing section 22 and the external environment is prevented.

Preferably, the first dispensing section 20 is positioned in a rear region of the dispensing head 4, and the nozzle 29 is positioned in a front region of the dispensing head 4.

The dispensing head 4 further comprises a cylinder wall 24, having an internal surface 24b which annularly delimits the cylinder chamber 14. In the cylinder wall 24, a main vent passage 26 is formed which places the main opening 12a in communication with the cylinder chamber 14, and in particular with the internal surface 24b.

Preferably, the cylinder chamber 14 is delimited at the bottom by a bottom wall 25, for example from which the suction mouth 18a of the suction duct projects, and in particular the second suction section 18.

The head 4 further comprises a sleeve 30, inserted in the cylinder chamber 14.

According to an embodiment, the sleeve 30 is inserted into the cylinder chamber 14 in a fixed angular position, i.e. constrained to rotation around the chamber axis K.

According to a different embodiment (not shown), the sleeve 30 is rotatably coupled in the cylinder chamber 14, i.e. it is free to rotate around the chamber axis K.

The sleeve 30 comprises a cylindrical sleeve wall 32 having an external surface 32a and an internal surface 32b.

The dispensing head 4 further comprises a labyrinth seal 35, suitable for placing the main vent passage 26 in communication with the external environment.

In particular, one of the external surface 32a of the sleeve 30 and the internal surface 24b of the cylinder chamber 24 comprises a labyrinth seal 35 suitable for placing the main vent passage 26 in communication with the external environment.

According to an embodiment, the labyrinth seal 35 is on the external surface 32a of the sleeve 30.

According to a different embodiment (not shown), the labyrinth seal 35 is on the internal surface 24b of the cylinder chamber 24.

Preferably, the labyrinth seal 35 comprises a channel 35', suitable for placing the main vent passage 26 in communication with the external environment. For example, the channel 35' has a circumferential or spiral extension. In an embodiment variant (not shown), the channel 35' is linear and curvilinear, for example linear in sections.

Furthermore, the sleeve 30 preferably comprises a continuous ridge 351 which laterally defines the channel 35'. In particular, said continuous ridge 351 is positioned in contact with the internal surface 24b, thus creating a seal against product leakage.

In other words, the labyrinth seal 35 is shaped to provide a tortuous path suitable for placing the external environment in fluid connection with the main vent passage 26. In fact, the air may be drawn back, for example as a result of a depression, towards an internal compartment of the bottle 2 through the channel 35'; however, a small quantity of liquid that comes out of the main vent passage 26 may not go entirely through the channel 35' and exit outside the dispensing head 4. In particular, the continuous ridge 351 forces the liquid to continue along the channel 35', hindering the leakage, since it forms a meatus with the internal surface 24b.

According to an embodiment, the sleeve 30 comprises at least one circumferential sealing ridge 42a, projecting from the external surface 32a and positioned in contact with the internal surface 24b, creating a seal against product leakage therewith.

For example, the sleeve 30 comprises two axially spaced circumferential sealing ridges 42a, preferably side by side with and axially spaced from the labyrinth seal 35.

Preferably, moreover, the cylinder wall 24 comprises at least one circumferential sealing ridge formed in the internal surface at said at least one circumferential sealing ridge 42a, collaborating with this to provide a seal against product leakage.

For example, the cylinder wall 24 comprises two circumferential sealing ridges positioned at two circumferential sealing ridges 42a.

Preferably, the sleeve 30 further has a secondary vent passage 50 passing through the sleeve wall 32, which surfaces on the external surface 32a. The secondary vent passage 50 is suitable for placing the main vent passage 26 in communication with the external environment.

Preferably, the secondary vent passage 50 is positioned between the labyrinth seal 35 and a circumferential sealing ridge 42a.

Preferably, moreover, at a first axial end 42' of the sleeve wall 32, the sleeve wall 32 defines a head opening 33 of the sleeve 30, delimited by a sleeve edge 33a.

According to an embodiment, at a second axial end 42'' from the sleeve wall 32 opposite the first axial end 42', the sleeve 30 comprises a bottom wall 34 incident, for example orthogonal, to the chamber axis K.

According to an embodiment, at the second axial end 42'', the sleeve 30 comprises an annular end wall 36 projecting axially from the bottom wall 34, which defines a bottom opening 38 of the sleeve 30.

Preferably, said end wall 36 is radially lowered with respect to the sleeve wall 32.

The suction duct opens into the sleeve 30 through the bottom opening 38; in particular, the second suction section 18 opens into the sleeve 30, for example into the compartment 360 delimited by the end wall 36.

Preferably, the external surface 32a of the sleeve wall 32 has a converging truncated conical shape, for example converging at the rear. Preferably, moreover, also a sealing portion 245b of the internal surface 24b has a truncated conical shape. For example, said sealing portion 245b collaborates with the labyrinth seal 35 to make a seal against product leakage.

According to an embodiment, the sleeve 30 comprises a bottom lip 43 which extends circumferentially, positioned at the second axial end 42'' of the sleeve wall 32, for example projecting axially with respect to the sleeve wall 32.

Preferably, the bottom lip 43 has the shape of an annular crown.

Said bottom lip 43 is suitable for sealing the internal surface 24b which delimits the cylinder chamber 14, for example by elastically deforming radially towards the inside, to prevent leakage from the valve compartment 25' towards the cylinder chamber 14 and towards the external environment.

The bottom lip 43 is made in one piece with the sleeve 30, in particular with the sleeve wall 32 or the bottom wall 34, for example it is made of polypropylene PP.

Preferably, the bottom lip 43 is joined to the external surface 32a.

In particular, with the sleeve 30 mounted in the cylinder chamber 14, the bottom lip 43 faces, preferably projects, into the valve compartment 25'.

According to an embodiment, the bottom lip 43 extends radially in a divergent manner. That is, the bottom lip 43 is flared outwardly.

According to a different embodiment, the sleeve 30 comprises a sealing ring 44 which extends circumferentially, made by bi-injection integrally with the sleeve 30 and connected to the sleeve wall 32, preferably at the second axial end 42''.

In particular, the sealing ring 44 is made of a material particularly suitable for sealing the internal surface 24b to prevent leakage from the valve compartment 25' towards the cylinder chamber 14 and towards the external environment.

According to an embodiment, the sleeve 30 is made of a first rigid material, to make the pressure chamber 30a, for example polypropylene, and the sealing ring 44 is made of a second material at least partially elastically deformable, for example low density polyethylene LDPE.

In order to further improve the seal, the sealing ring 44 preferably comprises a thickened portion 445 adapted to deform elastically by sealingly engaging the internal surface 24b.

Preferably, with the sleeve 30 mounted in the cylinder chamber 14, the sealing ring 44 faces the valve compartment 25'.

Preferably, the sealing ring 44 is joined to the external surface 32a.

The head 4 further comprises a manually operable piston 80 for translating between an initial rest position and a final end-of-stroke position. The sleeve annularly defines a pressure chamber 30a, in which said piston 80 operates.

The piston 80 is inserted into the sleeve 30 through the head opening 33 and sealingly slides within said sleeve 30.

Preferably, the piston 88 is made in one piece of plastic material, obtained for example by injection molding.

The preferably hollow piston 80 comprises an annular piston wall 82 extending along a piston axis P between a front end 84 and a rear end 86.

Preferably, the piston 80 comprises a piston bottom 87 at the front end 84. At the rear end 86, the piston 80 has a piston coupling portion 90 for coupling to a trigger of the head 4, provided for example with holes 92.

Preferably, the piston 80 comprises a circumferential main piston seal 89 and a secondary piston seal 88, projecting externally from the piston wall 82. In particular, inside the sleeve 30, the main piston seal 89 axially delimits the pressure chamber 30a together with the bottom wall 25 where the suction duct opens, and in particular the second suction section 18.

Preferably, the secondary vent passage 50 is open on the internal surface 32b of the sleeve 30 and between the main piston seal 89 and the secondary piston seal 88, in the initial rest position of the piston 80.

Preferably, at least one through connection opening 27 having a circumferential pattern is formed in the cylinder wall 24, for example a pair of diametrically opposite connection openings 27. For example, the connection opening 27 is peripherally defined by connection opening edges 270.

Furthermore, the sleeve 30 comprises at least one connection member 31, for example a pair of connection members 31, projecting radially from the external surface 32a. Said at least one connection member 31 is housed in the connection opening 27, making a shape coupling with this, to constrain the sleeve 30 in the cylinder chamber 14.

Preferably, the connection member 31 comprises a central slide 316 snapped into the connection opening 27, for example during the operations of inserting the sleeve 30 into the cylinder chamber 14, axially constraining the sleeve 30 into the cylinder chamber 14.

Preferably, the central slide 316 comprises a central step 316' facing forward, adapted to axially abut the connection opening edges 270 which define the connection opening 27.

In other words, the central slide 316 is axially inclined, for example converging towards the end wall 36.

Preferably, moreover, the connection member 31 comprises a pair of circumferential portions 318 having a circumferential extension substantially equal to the circumferential extension of the connection opening 27 in which they are housed, angularly constraining the sleeve 30 in the cylinder chamber 14.

Preferably, moreover, the connection member 31 comprises a pair of auxiliary slides 317 placed side by side with the central slide 316, for example angularly spaced from said central slide 316, thereby defining a pair of slide compartments 315.

Preferably, the auxiliary slides 317 are positioned at the circumferential portions 318.

In a first embodiment, the auxiliary slides 317 are at least partially inclined parallel to the central slide 316.

In a second embodiment, the auxiliary slides 317 are at least partially inclined circumferentially.

In a third embodiment, the auxiliary slides 317 are at least partially inclined both axially, i.e. parallel to the central slide 316, and at least partially inclined circumferentially.

Preferably, the cylinder chamber 14 has a variation in diameter which determines an annular space 141 with a larger diameter. Furthermore, the sleeve 30 comprises at least one axial rib 37 projecting radially from the external surface 32a which is housed in said annular compartment 141.

Preferably, the cylinder wall 24 comprises a step 243, at the variation in diameter, and a compartment wall 241 which annularly delimits said annular compartment 141.

In one embodiment, the at least one connection opening 27 is made in the compartment wall 241.

Preferably, the sleeve 30 comprises a plurality of angularly spaced axial ribs 37, positioned circumferentially between two connection members 31.

The head 4 further comprises a trigger 100, comprising a lever actuation portion 102 suitable for positioning the user's fingers for actuating the head 4, and a trigger engagement portion 104 for connecting with the piston 80. For example, the trigger 100 is hinged to the piston 80, for example by engagement of the trigger engagement portion 104 with the piston engagement portion 90 of the piston 80.

Preferably, the head 4 also comprises elastic return means suitable for operating permanently on the piston 80, directly or indirectly, to bring it to an initial position, which will be discussed later. For example, said return means comprise at least one flexible element 110, preferably a pair of flexible elements, made in one piece with the actuation portion 102 of the trigger 100.

Preferably, a valve compartment 25' is defined between the sleeve 30, the cylinder wall 24 and the bottom wall 25.

Preferably, the valve compartment 25' has an annular shape radially around the end wall 36.

The head 4 further comprises valve means suitable for regulating the flow of product from the suction duct to the pressure chamber 30a and from the pressure chamber 30a to the dispensing duct. Said valve means are accommodated in the valve compartment 25'.

Preferably, said valve means comprise an at least partially flexible valve element 200, made in a single piece, for example by injection molding.

According to an embodiment, the valve element 200 comprises a tubular portion 202 consisting of an annular valve wall 204 extending along a valve axis V, between a rear end 206 which defines a rear opening 208, and a front end 210.

The valve element 200 further comprises a flexible flap 212 connected in a cantilevered manner to the front end 210 of the valve wall 204, projecting radially internally.

The flap 212 has, from the side facing the rear opening 208, a shutter portion 214, for example flat or hemispherical or truncated-cone shape.

The valve element 200 further comprises an annular membrane 216 that extends radially externally from the tubular portion 202. The membrane 216 is, for example, concave on the side facing the front end 210 of the tubular portion 202, or according to further variants (not shown), the membrane 216 is flat or convex on the side facing the front end 210 of the tubular portion 202.

The valve element 200 further comprises a support portion 218 composed of an annular support wall 220 that connects to and surrounds the membrane 216.

Preferably, the membrane 216 extends in a radial direction beyond the end wall 36.

Preferably, the support wall 220 has a flared shape toward the front end 210 of the tubular portion 202 and, on the part facing the rear end 206, a wavy valve base 222 that forms a support for the valve element.

The valve element 200 is located in the cylinder chamber 14, against the bottom wall 25, against which the valve base 222 is placed; the support wall 220, on the other hand, is in contact with the cylinder wall 24 and creates a seal against product leakage.

The tubular portion 212 is threaded onto the suction duct, and in particular onto the second suction segment 18, and the flap 212 forms a flexible shutter for said suction duct. The suction mouth 18a of the suction duct and the flexible flap 212 form suitable suction valve means for allowing product to pass from the suction duct to the pressure chamber 30a in a suction step and preventing product from passing from the pressure chamber 30a to the suction duct in a dispensing step.

The membrane 216 cooperates with the sleeve 30, and in particular closes the bottom opening 38 of the pressure chamber 30a and abuts against the end wall 36. The end wall 36 and the membrane 216 form pre-compression valve means suitable to allow product to pass from the pressure chamber 30a to the dispensing duct only when the pressure in the pressure chamber 30a exceeds a predetermined threshold value. Said pre-compression valves are also suitable for preventing the product from passing from the dispensing duct to the pressure chamber 30a during a suction step.

The valve element 200, cooperating with the suction mouth 18a of the suction duct and the end wall 36 of the sleeve, thus integrates both the suction valve means and the pre-compression valve means into a single component.

In normal operation of the trigger dispensing device, the head 4 is applied to the bottle 2, so that the suction duct is in communication with the compartment inside the bottle 2 through the main opening 12a.

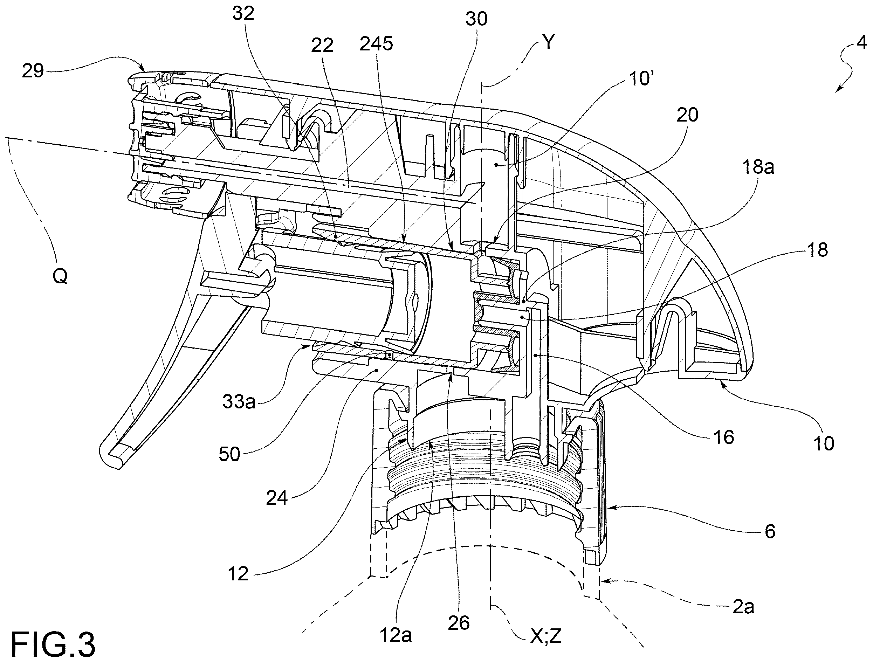

Preferably, in an initial configuration in which the trigger 100 and the piston 80 are in a respective initial rest position (Fig. 3), the pre-compression valve means and the valve suction means are in a respective closed configuration.

Furthermore, preferably, in the initial configuration, the secondary vent passage 50 is axially included between the main piston seal 89 and the secondary piston seal 88 of the piston 80.

Furthermore, preferably, in the initial configuration, the main vent passage 26 is fluidically isolated from the external environment.

By actuating the trigger 100, the axial translation of the piston 80 occurs, said piston moving within the sleeve 30 and putting pressure on the product contained in the pressure chamber 30a.

Preferably, as long as the secondary piston seal 88 is positioned beyond the secondary vent passage 50, the secondary vent passage 50 is in fluid communication with the external environment.

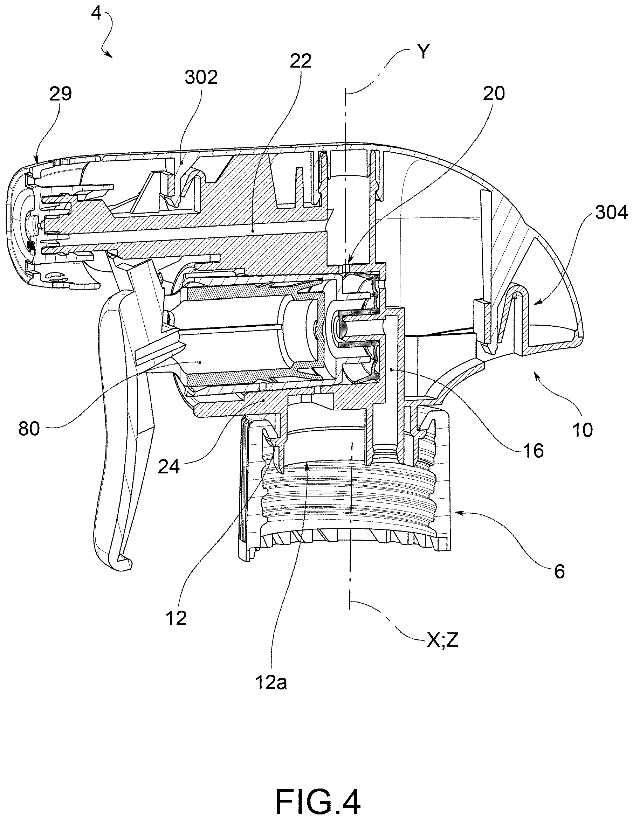

Once a predefined threshold pressure in the pressure chamber 30a has been exceeded, the pre-compression valve means switch to an open configuration in which they allow the passage of the product from the pressure chamber 30a to the dispensing duct (Fig. 4).

Specifically, the membrane 216 separates from the end wall 36 of the sleeve 30 and allows the product to pass to the dispensing duct, allowing it to be dispensed externally through the nozzle 29 (dispensing step). The suction valve means remain in the closed configuration.

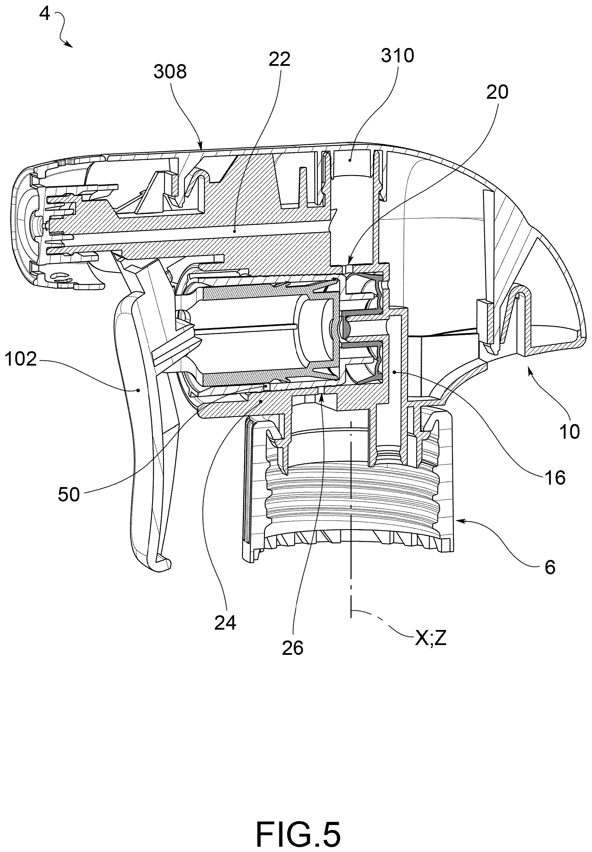

Once the trigger 100 and the piston 80 have reached the end-of-stroke position (Fig. 5) and the dispensing step has finished, the trigger 100 is released and the elastic return means operates to return the piston 80 and the trigger 100 to the initial rest position.

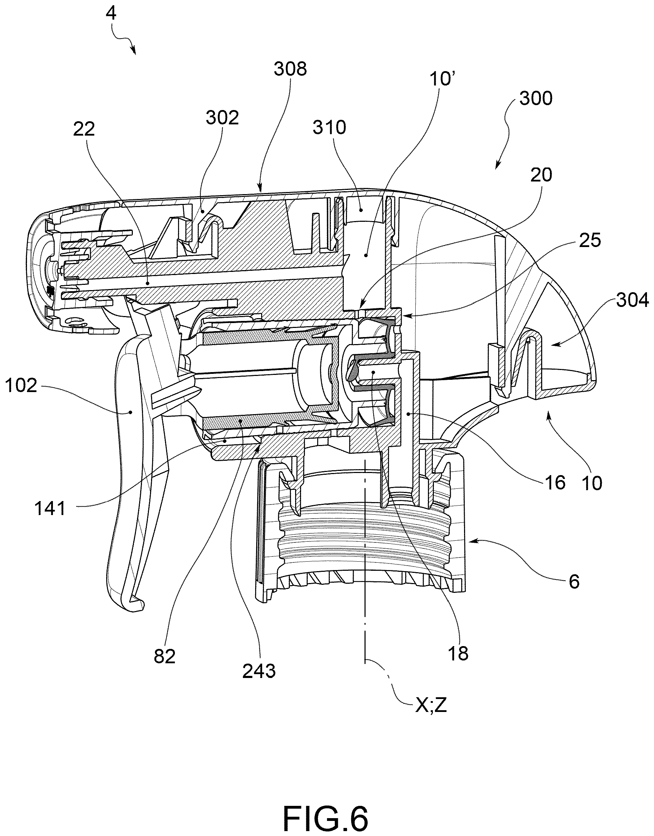

The return of the piston 80 towards the initial rest position causes a depression in the pressure chamber 30a, which causes the switching of the suction valve means to an open configuration in which they allow the suction of the product from the suction duct into the pressure chamber 30a (Fig. 6).

In particular, the membrane 212 bends and detaches from the suction mouth 18a of the suction duct, allowing the product to pass from the suction duct into the pressure chamber 30a (suction step).

Furthermore, in the suction step, the internal compartment of the bottle is in communication with the external environment through the secondary vent passage 50, the channel 35' of the labyrinth seal 35 and the main vent passage 26.

According to a different embodiment, the valve element 200 comprises the annular valve wall 204 and an engagement wall 260 projecting from the membrane 216 along the valve axis V, for example concentric to the annular valve wall 204.

Preferably, the engagement wall 260 has an external engagement surface 260a having at least one end zone, distal from the membrane 216, flared outwards.

In addition, the end wall 36 of the sleeve 30 comprises an internal end surface 36a facing the compartment 360 delimited by the end wall 36.

In particular, the internal end surface 36a comprises a first portion 36a' axially ending with the bottom opening 38, and a second portion 36a'' connected to the first portion 36a', for example of a truncated conical shape, ending at the base of the end wall 36, i.e. proximal to the bottom wall 34.

Cooperating with the internal end surface 36a of the end wall 36, the engagement wall 260 forms pre-compression valve means suitable to allow product to pass from the pressure chamber 30a to the dispensing duct only when the pressure in the pressure chamber 30a exceeds a predetermined threshold value.

In an initial configuration of the trigger 80, the engagement wall 260, preferably the flared end zone thereof, is in contact with the internal end surface 36a, preferably the second portion 36a'' thereof.

The sliding of the piston 80 generates a progressive increase in pressure in the pressure chamber 30a, causing the elastic deformation of the membrane 216 and the sliding of the engagement wall 260 along the internal end surface 36a, in the direction of the bottom wall 25. In this step, the pressurized product to be dispensed enters at least in part into the compartment 360.

Once a predefined threshold pressure in the pressure chamber 30a has been exceeded, for example the first portion 36a' has been reached, the engagement wall 260 allows the product to leave the compartment 360 and flow towards the valve compartment 25' (dispensing step).

For this purpose, for example, the end wall 36 has an inlet window 365 passing radially and open in the first portion 36a'.

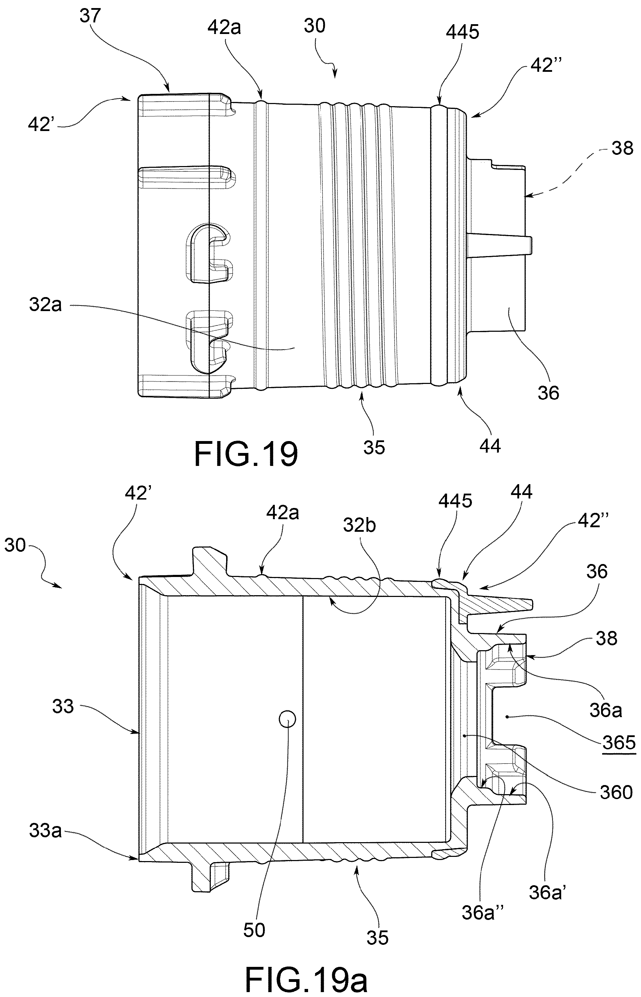

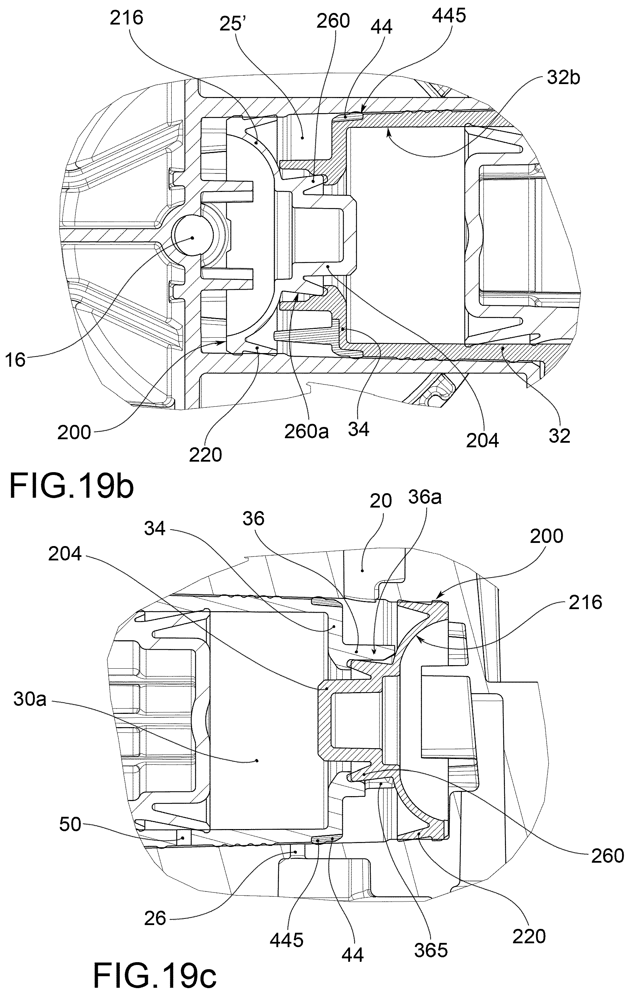

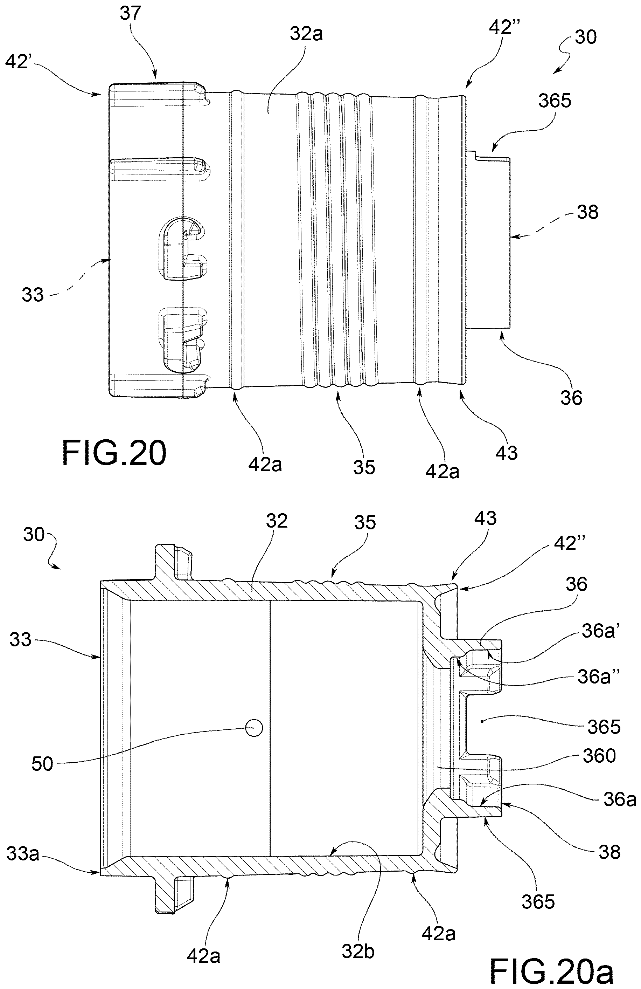

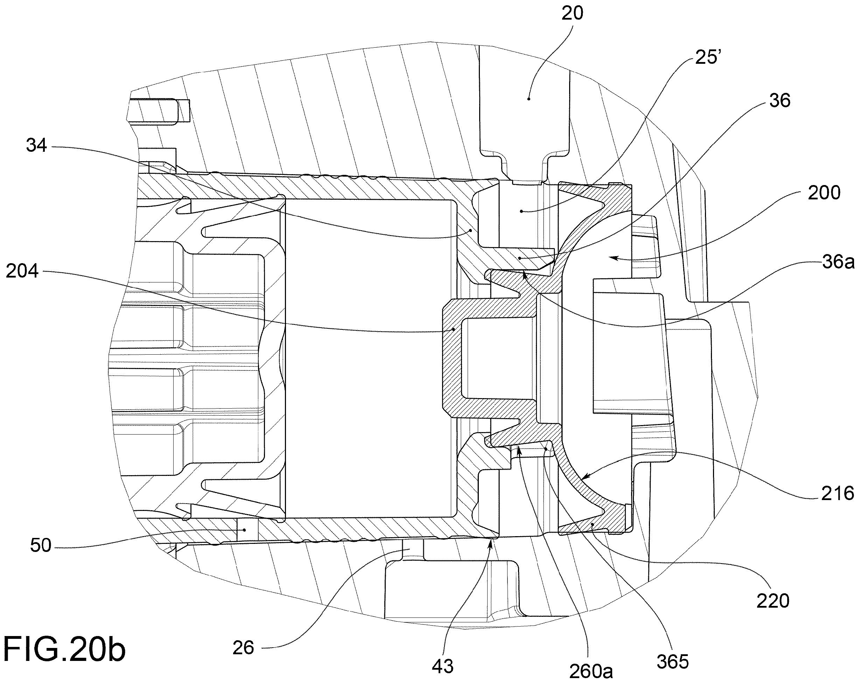

In the embodiment of Figs. 19 to 20b, the flexible flap 212 is replaced by a notch (not shown) in the valve wall 204, defined between separable lips to allow the passage of product towards the pressure chamber 30a (suction step).

Further details on the operation of the pre-compression valve means are described in international applications WO-A1-2014/013352 and WO2012/069939 in the name of the Applicant.

According to a preferred embodiment, moreover, the head 4 comprises a shell 300 attached to the frame 10 to cover it. Preferably, the shell 300 is applied to the frame 10 by at least one snap coupling.

For example, a first snap coupling 302 arranged in an upper region of the frame 10, such as above the second dispensing segment 22, and a second snap coupling 304, arranged in a lower region of the frame, for example below the bottom wall 25 of the cylinder chamber 14, are provided.

Preferably, moreover, an upper surface 306 of the shell 300 comprises a flat region 308. Advantageously, said region allows any weight on the device to be better supported, for example during storage in the warehouse, avoiding the detachment of the shell from the frame.

According to an embodiment, moreover, wherein the first dispensing segment 20 is formed in the frame 10 and extends along the first suction axis J orthogonal to the chamber axis K, the frame 10 also has an extension 10' of the first dispensing segment 20 along said first suction axis J.

The extension 10' is itself open to the outside in order to allow, during the molding of the frame, the introduction of a core for forming the first dispensing segment 20.

Preferably, the shell 300 comprises a cap 310, protruding internally, suitable for closing off access to the outside of the extension 10'.

Innovatively, the dispensing head described above meets the needs of the sector and overcomes the aforementioned drawbacks, since it allows a high seal against possible product leakage.

Advantageously, in fact, in a horizontal or overturned position during transport or storage, a leak of liquid that comes out of the bottle, for example through the main vent passage, runs into numerous sealing portions.

Advantageously, the labyrinth seal creates a tortuous path which considerably reduces and prevents the escape of liquid from the main vent passage.

Advantageously, the sleeve engages the cylinder chamber in a fixed position, and in particular in a fixed angular position, further improving the seal. In fact, as verified by the Applicant, if the sleeve is free to move in the cylinder chamber, it undergoes malfunctions and leaks, with consequent product leakage.

Advantageously, the bottom lip of the sleeve effectively reduces the leakage of product under pressure present in the valve compartment.

Advantageously, the bi-injected sealing ring with the sleeve further improves the seal against product leakage from the valve compartment. In particular, the bi-injected sealing ring achieves a better seal than that provided by the sleeve made of rigid material.

Advantageously, moreover, the piston slides inside the sleeve, which is substantially free of shrinkage after molding; the sliding takes place, therefore, on a surface having a high cylindricity which ensures a better seal.

It is understood that those skilled in the art, in order to meet contingent needs, could make modifications to the dispensing head described above, all of which are contained within the scope of protection as defined by the following claims.

## Claims

1. A trigger dispensing head (4) applicable to a bottle (2) of a trigger dispensing device (1) for dispensing a product, comprising:
- a frame (10), suitable for supporting the components of the head (4), comprising a main opening (12a) in communication with an internal compartment of the bottle (2);
- a cylinder chamber (14) annularly delimited by a cylinder wall (24) having an internal surface (24b), wherein a main vent passage (26) is obtained in the cylinder wall (24), putting in communication the main opening (12a) with the internal surface (24b) of the cylinder wall (24);
- a manually operable piston (80) for translating between an initial rest position and a final end-of-stroke position;
- a pressure chamber (30a) in which said piston (80) operates;
- a sleeve (30), which delimits said pressure chamber (30a), at least partially housed in the cylinder chamber (14), comprising an annular sleeve wall (32), which has an external surface (32a) and an internal surface (32b);
- a suction duct suitable for putting the internal compartment of the bottle (2) in communication with the pressure chamber (30a);
- a dispensing duct suitable for putting the pressure chamber (30a) in communication with the external environment; and
- valve means for adjusting the flow of product from the suction duct to the pressure chamber (30a) during a suction step and from the pressure chamber (30a) to the dispensing duct during a dispensing step;
the trigger dispensing head (4) being **characterized by** a labyrinth seal (35) suitable for putting the main vent passage (26) in communication with the external environment, obtained on one of the external surface (32a) of the sleeve (30) and the internal surface (24b) of the cylinder wall (24).

2. A dispensing head (4) according to claim 1, wherein the labyrinth seal (35) is obtained on the external surface (32a) of the sleeve (30).

3. A dispensing head (4) according to claim 1 or claim 2, wherein the sleeve (30) is housed in a fixed angular position in the cylinder chamber (14).

4. A dispensing head (4) according to any one of the preceding claims, wherein the labyrinth seal (35) comprises a channel (35') having a circumferential extension or a spiral conformation.

5. A dispensing head (4) according to claim 4, wherein the sleeve (30) comprises a continuous ridge (351) that laterally defines the channel (35'), said continuous ridge (351) positioned in contact with the internal surface (24b) of the cylinder wall (24), thus creating a seal against product leakage therewith.

6. A dispensing head (4) according to any one of the preceding claims, wherein the sleeve (30) comprises at least one circumferential sealing ridge (42a), projecting from the external surface (32a) and positioned in contact with the internal surface (24b) of the cylinder wall (24), creating a seal against product leakage therewith.

7. A dispensing head (4) according to any one of the preceding claims, wherein the sleeve (30) comprises a secondary vent passage (50), passing in the sleeve wall (32), suitable for putting the main vent passage (26) in communication with the external environment.

8. A dispensing head (4) according to claim 7 when dependent on claim 6, wherein the secondary vent passage (50) is positioned between the labyrinth seal (35) and a circumferential sealing ridge (42a).

9. A dispensing head (4) according to claim 8 or claim 7, wherein the piston (8) comprises a main piston seal (89) and a secondary piston seal (88) that sealingly and slidably engage the internal surface (32b) of the sleeve wall (32), wherein the secondary vent passage (50) is open on the internal surface (32b) of the sleeve wall (32), between the main piston seal (89) and the secondary piston seal (88) in the initial rest position of the piston (80).

10. A dispensing head (4) according to any one of the preceding claims, wherein the sleeve (30) comprises a bottom lip (43) projecting with respect to the sleeve wall (32), suitable for sealingly engaging the internal surface (24b) of the cylinder wall (24) to prevent leakage towards the cylinder chamber (14).

11. A dispensing head (4) according to any one of claims 1 to 9, wherein the sleeve (30) comprises a sealing ring (44) made by bi-injection, connected to the sleeve wall (32) and suitable for sealingly engaging the internal surface (24b) of the cylinder wall (24) to prevent leakage towards the cylinder chamber (14), wherein the sleeve (30) is made of a first rigid material, for example polypropylene, and the sealing ring (44) is made of a second at least partially elastically deformable material, for example low density polyethylene.

12. A dispensing head (4) according to any one of the preceding claims, comprising a radially through connection opening (27) in the cylinder wall (24), wherein the sleeve (30) comprises at least one connection member (31), projecting radially from the external surface (32a), that makes a shape coupling with the connection opening (27) to constrain the sleeve (30) in the cylinder chamber (14).

13. A dispensing head (4) according to claim 12, wherein the connection member (31) comprises a central slide (316) snapped into the connection opening (27), axially constraining the sleeve (30) in the cylinder chamber (14).

14. A dispensing head (4) according to any one of claims 12 or 13, wherein the connection member (31) comprises a pair of circumferential portions (318) having a circumferential extension substantially equal to the circumferential extension of the connection opening (27) in which they are housed, angularly constraining the sleeve (30) in the cylinder chamber (14).

15. A dispensing head (4) according to any one of the preceding claims, when dependent on claim 13, wherein the connection member (31) comprises a pair of auxiliary slides (317) adjacent to the central slide (316), wherein said auxiliary slides (317) are at least partially inclined parallel to the central slide (316) and/or at least partially inclined circumferentially.

16. A dispensing head (4) according to claim 14 in combination with claim 15, wherein the auxiliary slides (317) are positioned at the circumferential portions (318).

17. A dispensing head (4) according to any one of the preceding claims, wherein the cylinder chamber (14) has a variation in diameter which determines an annular compartment (141) with a larger diameter, wherein the sleeve (30) comprises at least one axial rib (37) projecting radially from the external surface (32a) housed in said annular compartment (141).

18. A dispensing head (4) according to claim 17, when dependent on claim 12, comprising at least one pair of diametrically opposite connection members (31) and a plurality of axial ribs (37) positioned circumferentially between said connection members (31).

19. A dispensing head (4) according to any one of the preceding claims, wherein the external surface (32a) has a frustoconical shape converging at the rear.

## Patentansprüche

1. Auslöser-Dispensieraufsatz (4), welcher an einer Flasche (2) einer Auslöser-Dispensiervorrichtung (1) anbringbar ist, um ein Produkt zu dispensieren, umfassend:
- einen Rahmen (10), welcher dazu geeignet ist, die Komponenten des Aufsatzes (4) zu stützen, umfassend eine Hauptöffnung (12a), welche mit einem Innenraum der Flasche (2) in Austausch steht;
- eine Zylinderkammer (14), welche ringförmig durch eine Zylinderwand (24) begrenzt ist, welche eine Innenfläche (24b) aufweist, wobei ein Hauptventildurchgang (26) in der Zylinderwand (24) erhalten ist, welcher die Hauptöffnung (12a) mit der Innenfläche (24b) der Zylinderwand (24) in Austausch setzt;
- einen manuell bedienbaren Kolben (80) zum Versetzten zwischen einer initialen Ruheposition und einer finalen Endhubposition;
- eine Druckkammer (30a), in welcher der Kolben (80) arbeitet;
- eine Hülse (30), welche die Druckkammer (30a) begrenzt, wobei sie wenigstens teilweise in der Zylinderkammer (14) aufgenommen ist, wobei sie eine ringförmige Hülsenwand (32) umfasst, welche eine Außenfläche (32a) und eine Innenfläche (32b) aufweist;
- eine Saugführung, welche dazu geeignet ist, den Innenraum der Flasche (2) mit der Druckkammer (30a) in Austausch zu setzen;
- eine Dispensierführung, welche dazu geeignet ist, die Druckkammer (30a) mit der äußeren Umgebung in Austausch zu setzen; und
- Ventilmittel zum Anpassen des Flusses des Produkts von der Saugführung zu der Druckkammer (30a) während eines Saugschrittes und von der Druckkammer (30a) zu der Dispensierführung während eines Dispensierschrittes;
wobei der Auslöser-Dispensieraufsatz (4) **gekennzeichnet ist durch** einen Labyrinthverschluss (35), welcher dazu geeignet ist, den Hauptventildurchgang (26) mit der äußeren Umgebung in Austausch zu setzen, welcher an einem aus der Außenfläche (32a) der Hülse (30) und der Innenfläche (24b) der Zylinderwand (24) erhalten ist.

2. Dispensieraufsatz (4) nach Anspruch 1, wobei der Labyrinthverschluss (35) an der Außenfläche (32a) der Hülse (30) erhalten ist.

3. Dispensieraufsatz (4) nach Anspruch 1 oder Anspruch 2, wobei die Hülse (30) in einer fixierten Winkelposition in der Zylinderkammer (14) aufgenommen ist.

4. Dispensieraufsatz (4) nach einem der vorherigen Ansprüche, wobei der Labyrinthverschluss (35) einen Kanal (35') umfasst, welcher eine Ausdehnung in Umfangsrichtung oder eine spiralförmige Gestalt aufweist.

5. Dispensieraufsatz (4) nach Anspruch 4, wobei die Hülse (30) eine durchgehende Kante (351) umfasst, welche lateral den Kanal (35') definiert, wobei die durchgehende Kante (351) in Kontakt mit der Innenfläche (24b) der Zylinderwand (24) angeordnet ist, sodass sie damit einen Verschluss gegen Austreten des Produkts bildet.

6. Dispensieraufsatz (4) nach einem der vorhergehenden Ansprüche, wobei die Hülse (30) wenigstens eine umlaufende Verschlusskante (42a) umfasst, welche von der Außenfläche (32a) hervorsteht und in Kontakt mit der Innenfläche (24b) der Zylinderwand (24) angeordnet ist, wobei sie damit einen Verschluss gegen Austreten des Produkts bildet.

7. Dispensieraufsatz (4) nach einem der vorhergehenden Ansprüche, wobei die Hülse (30) einen sekundären Ventildurchgang (50) umfasst, welcher in der Hülsenwand (32) verläuft, welcher dazu geeignet ist, den Hauptventildurchgang (26) mit der äußeren Umgebung in Austausch zu setzen.

8. Dispensieraufsatz (4) nach Anspruch 7, wenn abhängig von Anspruch 6, wobei der sekundäre Ventildurchgang (50) zwischen dem Labyrinthverschluss (35) und einer umlaufenden Verschlusskante (42a) angeordnet ist.

9. Dispensieraufsatz (4) nach Anspruch 8 oder Anspruch 7, wobei der Kolben (8) einen Hauptkolbenverschluss (89) und einen sekundären Kolbenverschluss (88) umfasst, welche verschließend und verschiebbar mit der Innenfläche (32b) der Hülsenwand (32) in Eingriff stehen, wobei der sekundäre Ventildurchgang (50) an der Innenfläche (32b) der Hülsenwand (32) offen ist zwischen dem Hauptkolbenverschluss (89) und dem sekundären Kolbenverschluss (88) in der initialen Ruheposition des Kolbens (80).

10. Dispensieraufsatz (4) nach einem der vorhergehenden Ansprüche, wobei die Hülse (30) einen unteren Rand (43) umfasst, welcher in Bezug auf die Hülsenwand (32) hervorsteht, welcher dazu geeignet ist, verschließend mit der Innenfläche (24b) der Zylinderwand (24) in Eingriff zu stehen, um ein Austreten zu der Zylinderkammer (14) zu verhindern.

11. Dispensieraufsatz (4) nach einem der Ansprüche 1 bis 9, wobei die Hülse (30) einen Verschlussring (44) umfasst, welcher durch Bi-Injektion gefertigt ist, welcher mit der Hülsenwand (32) verbunden ist und dazu geeignet ist, verschließend mit der Innenfläche (24b) der Zylinderwand (24) in Eingriff zu stehen, um ein Austreten zu der Zylinderkammer (14) zu verhindern, wobei die Hülse (30) aus einem ersten rigiden Material, wie zum Beispiel Polypropylen, und der Verschlussring (44) aus einem zweiten zumindest teilweise elastisch deformierbaren Material gefertigt ist, wie zum Beispiel Polyethylen mit niedriger Dichte.

12. Dispensieraufsatz (4) nach einem der vorhergehenden Ansprüche, umfassend eine radiale Hindurchverbindungsöffnung (27) in der Zylinderwand (24), wobei die Hülse (30) wenigstens ein Verbindungsbauteil (31) umfasst, welches radial von der Außenfläche (32a) hervorsteht, welches mit der Verbindungsöffnung (27) eine Formkopplung bildet, um die Hülse (30) in der Zylinderkammer (14) zu beschränken.

13. Dispensieraufsatz (4) nach Anspruch 12, wobei das Verbindungsbauteil (31) einen zentralen Schlitten (316) umfasst, welcher in die Verbindungsöffnung (27) eingerastet ist, wodurch die Hülse (30) in der Zylinderkammer (14) axial beschränkt ist.

14. Dispensieraufsatz (4) nach einem der Ansprüche 12 oder 13, wobei das Verbindungsbauteil (31) ein Paar von Umfangsabschnitten (318) umfasst, welche eine Ausdehnung in Umfangsrichtung aufweisen, welche in etwa gleich wie die Ausdehnung in Umfangsrichtung der Verbindungsöffnung (27) ist, in welcher sie aufgenommen sind, wobei sie die Hülse (30) winkelig in der Zylinderkammer (14) beschränken.

15. Dispensieraufsatz (4) nach einem der vorhergehenden Ansprüche, wenn abhängig von Anspruch 13, wobei das Verbindungsbauteil (31) ein Paar von Hilfsschlitten (317) umfasst, welche benachbart zu dem zentralen Schlitten (316) sind, wobei die Hilfsschlitten (317) wenigstens teilweise geneigt parallel zu dem zentralen Schlitten (316) und/oder wenigstens teilweise in Umfangsrichtung geneigt sind.

16. Dispensieraufsatz (4) nach Anspruch 14 in Kombination mit Anspruch 15, wobei die Hilfsschlitten (317) an den Umfangsabschnitten (318) angeordnet sind.

17. Dispensieraufsatz (4) nach einem der vorhergehenden Ansprüche, wobei die Zylinderkammer (14) eine Variation eines Durchmessers aufweist, welcher einen ringförmigen Raum (141) mit einem größeren Durchmesser bestimmt, wobei die Hülse (30) wenigstens eine axiale Rippe (37) umfasst, welche radial von der Außenfläche (32a) hervorsteht, welche in dem ringförmigen Raum (141) aufgenommen ist.

18. Dispensieraufsatz (4) nach Anspruch 17, wenn abhängig von Anspruch 12, umfassend wenigstens ein Paar von diametral entgegengesetzten Verbindungsbauteilen (31) und eine Mehrzahl von axialen Rippen (37), welche in Umfangsrichtung zwischen den Verbindungsbauteilen (31) angeordnet sind.

19. Dispensieraufsatz (4) nach einem der vorhergehenden Ansprüche, wobei die Außenfläche (32a) eine kegelstumpfförmige Form aufweist, welche an der Hinterseite zusammenläuft.

## Revendications

1. Tête de distribution à gâchette (4) applicable à une bouteille (2) d'un dispositif de distribution à gâchette (1) pour distribuer un produit, comprenant :
- un cadre (10), adapté pour supporter les composants de la tête (4), comprenant une ouverture principale (12a) en communication avec un compartiment interne de la bouteille (2) ;
- une chambre cylindrique (14) délimitée annulairement par une paroi cylindrique (24) présentant une surface interne (24b), dans laquelle un passage d'évent principal (26) est obtenu dans la paroi cylindrique (24), mettant en communication l'ouverture principale (12a) avec la surface interne (24b) de la paroi cylindrique (24) ;
- un piston (80) à commande manuelle pour la translation entre une position de repos initiale et une position de fin de course finale ;
- une chambre de pression (30a) dans laquelle fonctionne ledit piston (80) ;
- un manchon (30), qui délimite ladite chambre de pression (30a), au moins partiellement logé dans la chambre cylindrique (14), comprenant une paroi de manchon annulaire (32), qui présente une surface externe (32a) et une surface interne (32b) ;
- un conduit d'aspiration adapté à la mise en communication du compartiment interne de la bouteille (2) avec la chambre de pression (30a) ;
- un conduit de distribution adapté à la mise en communication de la chambre de pression (30a) avec l'environnement externe ; et
- des moyens de vanne pour ajuster l'écoulement de produit du conduit d'aspiration à la chambre de pression (30a) pendant une étape d'aspiration et de la chambre de pression (30a) au conduit de distribution pendant une étape de distribution ;
la tête de distribution à gâchette (4) étant **caractérisée par** un joint labyrinthe (35) adapté à la mise en communication du passage d'évent principal (26) avec l'environnement externe, obtenu sur l'une de la surface externe (32a) du manchon (30) et de la surface interne (24b) de la paroi cylindrique (24).

2. Tête de distribution (4) selon la revendication 1, dans laquelle le joint labyrinthe (35) est obtenu sur la surface externe (32a) du manchon (30).

3. Tête de distribution (4) selon la revendication 1 ou 2, dans laquelle le manchon (30) est logé dans une position angulaire fixe dans la chambre cylindrique (14).

4. Tête de distribution (4) selon l'une quelconque des revendications précédentes, dans laquelle le joint labyrinthe (35) comprend un canal (35') présentant une extension circonférentielle ou une conformation en spirale.

5. Tête de distribution (4) selon la revendication 4, dans laquelle le manchon (30) comprend une crête continue (351) qui définit latéralement le canal (35'), ladite crête continue (351) étant positionnée au contact de la surface interne (24b) de la paroi cylindrique (24), en créant ainsi une étanchéité contre les fuites de produit de celle-ci.

6. Tête de distribution (4) selon l'une quelconque des revendications précédentes, dans laquelle le manchon (30) comprend au moins une crête d'étanchéité circonférentielle (42a), faisant saillie de la surface externe (32a) et positionnée au contact de la surface interne (24b) de la paroi cylindrique (24), en créant ainsi une étanchéité contre les fuites de produit de celle-ci.

7. Tête de distribution (4) selon l'une quelconque des revendications précédentes, dans laquelle le manchon (30) comprend un passage d'évent secondaire (50), passant dans la paroi de manchon (32), adapté à la mise en communication du passage d'évent principal (26) avec l'environnement externe.

8. Tête de distribution (4) selon la revendication 7 lorsqu'elle dépend de la revendication 6, dans laquelle le passage d'évent secondaire (50) est positionné entre le joint labyrinthe (35) et une crête d'étanchéité circonférentielle (42a).

9. Tête de distribution (4) selon la revendication 8 ou 7, dans laquelle le piston (8) comprend un joint de piston principal (89) et un joint de piston secondaire (88) qui viennent en prise de manière étanche et coulissante avec la surface interne (32b) de la paroi de manchon (32), dans laquelle le passage d'évent secondaire (50) est ouvert sur la surface interne (32b) de la paroi de manchon (32) entre le joint de piston principal (89) et le joint de piston secondaire (88) dans la position de repos initiale du piston (80).

10. Tête de distribution (4) selon l'une quelconque des revendications précédentes, dans laquelle le manchon (30) comprend une lèvre inférieure (43) faisant saillie par rapport à la paroi de manchon (32), adaptée pour venir en prise étanche avec la surface interne (24b) de la paroi cylindrique (24) pour empêcher toute fuite vers la chambre cylindrique (14).

11. Tête de distribution (4) selon l'une quelconque des revendications 1 à 9, dans laquelle le manchon (30) comprend une bague d'étanchéité (44) réalisée par bi-injection, reliée à la paroi de manchon (32) et adaptée pour venir en prise étanche avec la surface interne (24b) de la paroi cylindrique (24) pour empêcher toute fuite vers la chambre cylindrique (14), dans laquelle le manchon (30) est constitué d'un premier matériau rigide, par exemple du polypropylène, et la bague d'étanchéité (44) est constituée d'un deuxième matériau au moins partiellement élastiquement déformable, par exemple du polyéthylène basse densité.

12. Tête de distribution (4) selon l'une quelconque des revendications précédentes, comprenant une ouverture de liaison (27) traversante radialement dans la paroi cylindrique (24), dans laquelle le manchon (30) comprend au moins un organe de liaison (31), faisant saillie radialement de la surface externe (32a), qui réalise un couplage de forme avec l'ouverture de liaison (27) pour contraindre le manchon (30) dans la chambre cylindrique (14).

13. Tête de distribution (4) selon la revendication 12, dans laquelle l'organe de liaison (31) comprend une glissière centrale (316) encliquetée dans l'ouverture de liaison (27), contraignant axialement le manchon (30) dans la chambre cylindrique (14).

14. Tête de distribution (4) selon l'une quelconque des revendications 12 et 13, dans laquelle l'organe de liaison (31) comprend une paire de parties circonférentielles (318) présentant une extension circonférentielle sensiblement égale à l'extension circonférentielle de l'ouverture de liaison (27) dans laquelle elles sont logées, en contraignant angulairement le manchon (30) dans la chambre cylindrique (14).

15. Tête de distribution (4) selon l'une quelconque des revendications précédentes, lorsqu'elle dépend de la revendication 13, dans laquelle l'organe de liaison (31) comprend une paire de glissières auxiliaires (317) adjacentes à la glissière centrale (316), dans laquelle lesdites glissières auxiliaires (317) sont au moins partiellement inclinées parallèlement à la glissière centrale (316) et/ou au moins partiellement inclinées circonférentiellement.

16. Tête de distribution (4) selon la revendication 14 en combinaison avec la revendication 15, dans laquelle les glissières auxiliaires (317) sont positionnées au niveau des parties circonférentielles (318).

17. Tête de distribution (4) selon l'une quelconque des revendications précédentes, dans laquelle la chambre cylindrique (14) présente une variation de diamètre qui détermine un compartiment annulaire (141) de plus grand diamètre, dans laquelle le manchon (30) comprend au moins une nervure axiale (37) faisant saillie radialement de la surface externe (32a) logée dans ledit compartiment annulaire (141).

18. Tête de distribution (4) selon la revendication 17, lorsqu'elle dépend de la revendication 12, comprenant au moins une paire d'organes de liaison (31) diamétralement opposés et une pluralité de nervures axiales (37) positionnées circonférentiellement entre lesdits organes de liaison (31).

19. Tête de distribution (4) selon l'une quelconque des revendications précédentes, dans laquelle la surface externe (32a) présente une forme tronconique convergeant vers l'arrière.
